# EUROPEAN PATENT SPECIFICATION

(11) **EP 2 892 133 B1**
(45) Date of publication and mention of the grant of the patent: **10.10.2018**
(21) Application number: 14195858.7
(22) Date of filing: 02.12.2014
(51) Int. Cl.: H02K 17/16, H02K 15/00, H02K 3/32

(54) **High slip variable frequency induction motors**
Leichtgleitende frequenzvariable Induktionsmotoren
Moteurs à induction pour fréquence variable à fort glissement

(30) Priority: 04.12.2013 GB 201321420
(43) Date of publication of application: 08.07.2015
(73) Proprietor: Eaton Intelligent Power Limited, 4 Dublin (IE)
(72) Inventor: Cooper, Brian, Locksheath, Hampshire SO31 6RN (GB)
(74) Representative: Eaton IP Group EMEA

(56) References cited:
- DE-A1- 10 350 171
- GB-A- 1 394 063
- GB-A- 2 277 205
- JP-A- S5 780 250
- JP-A- 2010 193 623
- US-A1- 2005 134 137

## Description

This invention relates to high slip variable frequency induction motors and in particular, but not exclusively to rotors for use in such motors, to methods for production thereof, and to fuel pump arrangements utilising such motors.

In a typical design of an induction motor, a squirrel cage rotor is rotatably mounted within a stator containing electrical windings. The rotor is formed of an elongate core of stacked laminations of magnetic material arranged concentrically with the rotor shaft, and a squirrel cage construction made up of rotor bars extending through the core and being connected at opposite ends by respective conducting end rings. In use, a current is induced in the rotor by applying voltage to the stator windings and the induced current flows around a circuit defined by successive adjacent pairs of rotor bars and closed by the respective end rings. In conventional induction motors, the core is not electrically insulated from the rotor bars. This does not significantly affect performance because, for typical operating regimes, the bar axial impedance of the bar in the axial direction is substantially lower than the impedance measured circumferentially between two adjacent bars and the core material (the inter-bar impedance).

Current rotors and methods include: US 2005/0134137, disclosing a method for manufacturing squirrel cage rotors, GB2277205, disclosing preventing sparking in rotating electrical machines. JP2010193623 discloses a cage rotor for an electric motor, electric motor, submersible pump and a manufacturing method thereof, however, this document does not expressly relate to a high slip induction motor. GB1394063 discloses improvements in rotors of squirrel cage motors. DE10350171 discloses a squirrel cage for a single-phase motor or 3-phase asynchronous motor, JPS5780250 discloses improvements in cage rotors with insulation layers.

We have however found that in certain operating regimes, and in particular in high slip variable frequency induction motors where the rotor is subject to drag (for example if it is immersed in a coolant fluid), it is preferred to design the rotor to be of relatively small diameter and relatively long length to reduce the drag. Also to mitigate the speed variation due to the variable frequency the rotor is designed to be high slip, which means by design the rotor bars are higher resistance (5 to 10 times higher resistance) than a typical rotor design. This is typically achieved by using a high resistivity material such as brass, phosphor bronze, or aluminium alloy. Typical materials may have a resistivity of greater than 5x10⁻⁸ Ωm. This geometry and material selection means that the ratio of bar axial impedance to inter-bar impedance becomes significantly greater and indeed in variable frequency motors can approach unity. Based on our analysis we have designed rotors and methods for production thereof which provide insulation between the rotor bars and the core material, thereby to reduce parasitic inter-bar current flow and thereby improving the efficiency of the rotors.

Accordingly in one aspect of this invention there is provided an immersed high slip variable frequency induction motor, for use in a fuel pump as claimed in claim 1..

Preferably the insulating material is sufficient to bring the parasitic loss down to less than 1-5%, depending upon the design.

The parasitic loss may be defined in terms of a reduction in electromagnetic torque produced for a given speed, typically of the order of 10-20% of the theoretical ideal in conventional designs.

In high slip variable frequency motors according to the invention, the ratio of the axial impedance to the impedance measured between the bars is advantageously at least 5:1 and preferably 50:1 or more.

The rotor bars may be insulated from the core material by providing insulating material associated with the bars and/or said core material. Thus for example a surface treatment may be applied to said rotor bars. The treatment may comprise coating with a ceramic or ceramic based insulating coating, by a suitable process such as plasma coating a water-based ceramic material onto the surface. Where said rotor bars are formed of aluminium, or an alloy thereof, for example by extrusion, said treatment may comprise anodising said bars to provide an insulating anodic coating.

Additionally or alternatively a suitable surface treatment may comprise surface treatment to the surfaces of said core adjacent said rotor bars.

Preferably said coating has a breakdown voltage of less than 10 Volts.

The invention extends to an electric motor arrangement including a rotor as described above connected to a variable frequency constant voltage source as typically found on latest generation aircraft; the connection is preferably a direct connection. A significant advantage is the ability of the motor to operate directly from the aircraft variable frequency supply (360 - 800Hz).

Preferably said motor has a power output in a range of from 0.5 to 10kW.

The invention also extends to a method of reducing parasitic current flow in an immersed high slip variable frequency induction motor, for a fuel pump, as claimed in claim 9

The invention also extends to method of forming an immeresed rotor for a variable frequency induction motor as claimed in claim 10.

Embodiments of the invention also extends to a fuel pump arrangement comprising a pump and an electric motor designed to be located in a fuel tank and immersed in fuel in use, said electric motor comprising a rotor as set out above. Preferably said rotor is immersed in sad fuel in use to effect cooling thereof.

Whilst the invention has been described above, it extends to any inventive combination or sub-combination of the features set out above, or in the following description, drawings or claims.

The invention may be performed in various ways, and, by way of example only, an embodiment thereof will now be described in detail, reference being made to the accompanying drawings, in which: -
Figure 1 is a schematic diagram of an embodiment of a fuel pump arrangement utilising an induction motor in accordance with this invention, and
Figure 2 is a schematic view of the rotor for the motor of Figure 1.

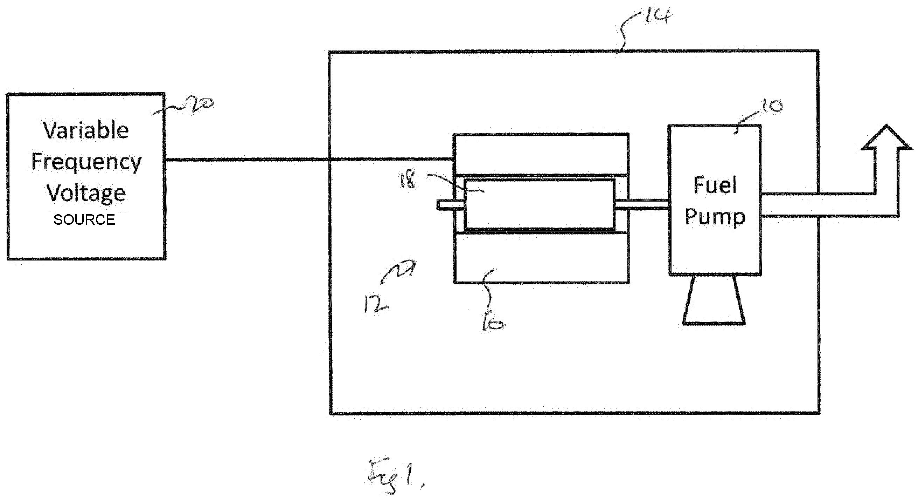

Referring initially to Figure 1, there is shown an aircraft fuel pump system for use on board an aircraft. A fuel pump 10 and an electric motor 12 that drives the pump 10 are located within a fuel tank 14 so that the fuel acts as a coolant for the electric motor. The electric motor 12 is a variable frequency electrical induction motor, including a stator 16 having windings, and a rotor 18 of squirrel cage construction to be described in more detail below. A variable frequency voltage source 20 situated outside the fuel tank provides a variable frequency drive to the electric motor. The rotor 18 is immersed in fuel which is present in the cylindrical gap between the stator 16 and the rotor 18 to provide a beneficial cooling effect, but this also provides drag. In order to reduce the amount of drag, the ratio of the length to the diameter of the rotor is greater than is normally the case in such motors, so that the rotor is of reduced diameter for a given power output. In this embodiment, the ratio of the length to the diameter is 3:1. Also as noted above the bars are of higher than usual resistivity. For low slip motors typical materials for the bars include copper with a resistivity of 1.7 micro-ohm.cm, and aluminium with a resistivity of 3.4 micro-ohm.cm. For high slip motors typical materials for the bars include phosphor bronze 510 with a resistivity of 11.54 micro-ohm.cm, brass (37% Zn) with a resistivity of 6.54 micro-ohm.cm, and aluminium alloy 380 with a resistivity of 6.54 micro-ohm.cm.

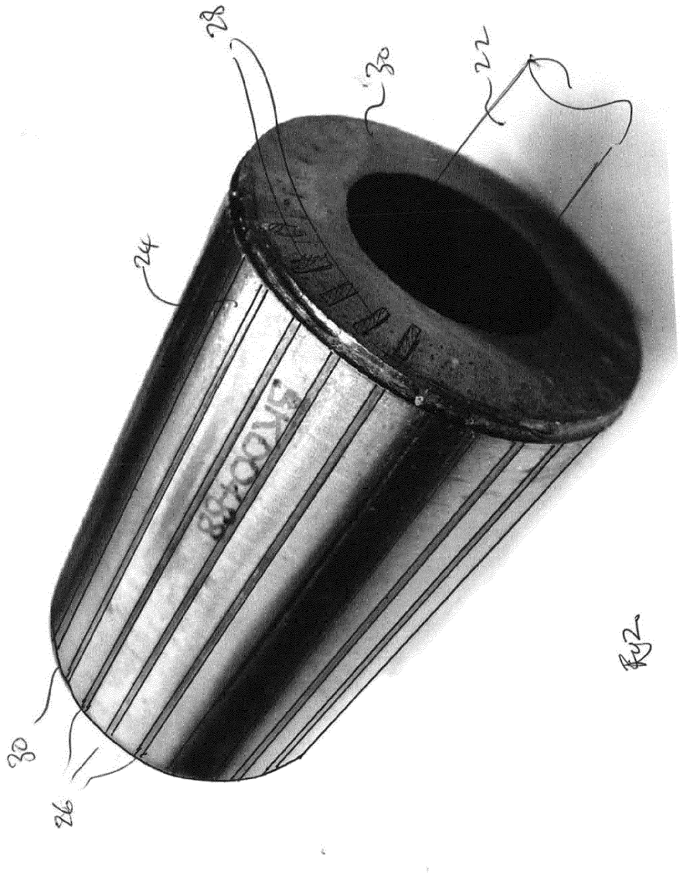

Referring now to Figure 2, the rotor comprises a shaft 22, a core made up of longitudinally stacked laminations 24 of magnetic material (e.g steel) defining passages for a plurality of rotor bars 26 which, in this embodiment, extend axially through the stack of laminations, at equally spaced angular increments. The ends of the bars project away from the stack and are received in respective apertures 28 in first and second end rings 30. In this embodiment, the cage comprising the rotor bars 26 and end rings is fabricated by assembling the separate elements, although in other arrangements at least part of the cage structure may be cast out of a suitable metal such as aluminium where a suitable thin insulating coating can be found that can withstand the casting temperatures of the cast material. Each of the rotor bars is made from a suitable electrically conducting material such as copper, phosphor-bronze etc, of the required cross section, which has received a surface treatment by plasma coating a ceramic insulating material onto the bar stock. The ceramic material may conveniently comprise Zirconia or Alumina ceramic and may be applied by plasma coating. The ceramic coating is required to provide effective electrical insulation to prevent current flowing from the bar, circumferentially into the laminations and thence into another bar. For this purpose, the ceramic coating may therefore typically be 125µm thick, with the coating having a breakdown voltage of less than 10 Volts. Once cut, the rotor bars are then fitted into the lamination stack, leaving the free ends projecting from opposite ends of the stack. The end rings 30 with suitably disposed apertures are then fitted at each end and the rotor bars are electrically and structurally connected in the apertures of the end rings by e.g. TIG welding. The assembly then may be double impregnated using polyester varnish to fill the clearance between the bars and the slots to prevent vibration fatigue fractures of the bars and to prevent corrosion of the lamination steel, and thereafter machined to provide the required outside and inside diameter dimensions. The rotor may then be fitted to its shaft 22.

The rotor so formed is therefore designed to eliminate or at least reduce current flowing from the rotor bars to the laminations. This reduces the losses that would otherwise be associated with a rotor of this size and construction (but without the insulated rotor bars).

In another embodiment, the rotor bars may be made of extruded aluminium which is anodised to provide an insulating coating.

## Claims

1. An immersed high slip variable frequency induction motor, for use in a fuel pump, the motor comprising
a rotor (18), immersed in fuel in use, said rotor including:
an elongate stacked lamination core (24) having a length and diameter,
a plurality of electrically conducting rotor bars (26) extending through said core, each having a first end and a second end, and
electrically conducting first and second end rings (30) electrically connected to the first and second ends respectively of said rotor bars, **characterised in that**:
the plurality of electrically conducting rotor bars (26) have a resistivity of greater than 5x10⁻8 Ωm and wherein an insulating material is disposed between said rotor bars and said core thereby to at least reduce or prevent parasitic current flow between the rotor bars and said core.

2. A motor according to Claim 1, wherein the ratio of the axial impedance to the impedance measured between the bars is at least 5:1.

3. A motor according to Claim 1 or 2 , wherein said coating has a breakdown voltage of less than 10 Volts.

4. A motor as claimed in any preceding Claim, wherein the ratio of the length to the diameter of the rotor bars is at least 3:1.

5. A motor according to any of claims 1 to 4, wherein said rotor bars (26) include a coating of insulating material.

6. A motor according to Claim 5, wherein the coating is a ceramic or ceramic-based insulating coating.

7. A motor according to any of Claims 1 to 5, wherein said rotor bars (26) are formed of aluminium alloy, and said bars are provided with an insulating anodic coating.

8. A high slip variable frequency electric motor arrangement including a motor as claimed in any of the preceding claims and a source for supplying a variable frequency voltage to said rotor to control the speed thereof.

9. A method of reducing parasitic current flow in an immersed high slip variable frequency induction motor, for a fuel pump, the motor having a rotor (18) immersed in fuel during use and including an elongate stacked laminated core (24), a plurality of electrically conducting rotor bars (26) extending through said core and each having a first and a second end with the first and second ends being electrically connected by respective first and second end rings (30), the method comprising forming the rotor bars from an electrically conducting material having a resistivity of greater than 5x10-8 Ωm providing an insulating material between the rotor bar and the core thereby to prevent or reduce current flow between the bars and the core.

10. A method of forming a rotor for an immersed high slip variable frequency induction motor, which comprises:
providing an elongate stacked lamination core (24) with a plurality of electrically conducting rotor bars(26) formed from an electrically conducting material having a resistivity of greater than 5x10⁻⁸ Ωm and extending through said core each rotor bar having a first and a second end, with the first and the second ends being electrically connected by respective first and second end rings (30), and
providing an insulating material between the rotor bar and the core, thereby to prevent or reduce current flow between the rotor bars and said core in operation.

11. A method according to Claim 9 wherein said insulation is provided by surface treatment of the rotor bars.

12. A method according to Claim 10, wherein said treatment comprises the application of a ceramic or ceramic-based insulating coating.

13. A method according to Claim 10 wherein said rotor bars are aluminium alloy and said surface treatment comprises anodising said bars to provide an anodic coating or layer.

14. A method according to any of Claims 8 to 12 which includes the step of applying a surface treatment to the surfaces of said core adjacent said rotor bars.

15. A fuel pump arrangement comprising a pump and an electric motor as claimed in any of Claims 1 to 8.

## Patentansprüche

1. Tauchinduktionsmotor mit variabler Frequenz bei hohem Schlupf zur Verwendung in einer Kraftstoffpumpe, wobei der Motor umfasst
einen Rotor (18), der in Verwendung in Kraftstoff eingetaucht ist, wobei der Rotor einschließt:
einen länglichen gestapelten Blechkern (24), der eine Länge und einen Durchmesser aufweist,
eine Vielzahl von elektrisch leitenden Rotorstäben (26), die sich durch den Kern erstrecken, wobei jeder ein erstes Ende und ein zweites Ende aufweist, und
elektrisch leitende erste und zweite Endringe (30), die jeweils mit den ersten und zweiten Enden der Rotorstäbe elektrisch verbunden sind, **dadurch gekennzeichnet, dass**:
die Vielzahl von elektrisch leitenden Rotorstäben (26) einen Widerstand von mehr als 5x10⁻⁸ Ωm aufweisen und
wobei ein Isoliermaterial zwischen den Rotorstäben und dem Kern angeordnet ist, um dadurch parasitären Stromfluss zwischen den Rotorstäben und dem Kern zumindest zu verringern oder zu verhindern.

2. Motor nach Anspruch 1, wobei das Verhältnis der axialen Impedanz zur Impedanz, die zwischen den Stäben gemessen wird, mindestens 5:1 ist.

3. Motor nach Anspruch 1 oder 2, wobei die Beschichtung eine Durchbruchsspannung von weniger als 10 Volt aufweist.

4. Motor nach einem der vorstehenden Ansprüche, wobei das Verhältnis der Länge zum Durchmesser der Rotorstäbe mindestens 3:1 ist.

5. Motor nach einem der Ansprüche 1 bis 4, wobei die Rotorstäbe (26) eine Beschichtung aus Isoliermaterial einschließen.

6. Motor nach Anspruch 5, wobei die Beschichtung eine keramische oder auf Keramik basierende Isolierbeschichtung ist.

7. Motor nach einem der Ansprüche 1 bis 5, wobei die Rotorstäbe (26) aus Aluminiumlegierung gebildet sind, und die Stäbe mit einer isolierenden anodischen Beschichtung bereitgestellt werden.

8. Elektromotoranordnung mit variabler Frequenz bei hohem Schlupf, einschließend einen Motor nach einem der vorstehenden Ansprüche und eine Quelle für die Zuführung einer Spannung mit variabler Frequenz zu dem Rotor zur Steuerung von dessen Geschwindigkeit.

9. Verfahren zur Verringerung eines parasitären Stromflusses in einem Tauchinduktionsmotor mit variabler Frequenz bei hohem Schlupf für eine Kraftstoffpumpe, wobei der Motor einen Rotor (18) aufweist, der in Verwendung in Kraftstoff eingetaucht ist und einen länglichen gestapelten Blechkern (24) einschließt, eine Vielzahl von elektrisch leitenden Rotorstäben (26), die sich durch den Kern erstrecken, und wobei jeder ein erstes Ende und ein zweites Ende aufweist, wobei die ersten und zweiten Enden über jeweilige erste und zweite Endringe (30) elektrisch verbunden sind, wobei das Verfahren das Bilden der Rotorstäbe aus einem elektrisch leitenden Material umfasst, das einen Widerstand von mehr als 5x10⁻⁸ Ωm aufweist, das ein Isoliermaterial zwischen dem Rotorstab und dem Kern bereitstellt, um dadurch parasitären Stromfluss zwischen den Stäben und dem Kern zumindest zu verringern oder zu verhindern.

10. Verfahren zur Bildung eines Rotors für einen Tauchinduktionsmotor mit variabler Frequenz bei hohem Schlupf, welches umfasst:
Bereitstellen eines länglichen gestapelten Blechkerns (24) mit einer Vielzahl von elektrisch leitenden Rotorstäben (26), die aus einem elektrisch leitenden Material gebildet sind, das einen Widerstand von mehr als 5x10⁻⁸ Ωm aufweist und sich durch den Kern erstreckt, wobei jeder Rotorstab ein erstes und ein zweites Ende aufweist, wobei die ersten und zweiten Enden über jeweilige erste und zweite Endringe (30) elektrisch verbunden sind, und
Bereitstellen eines Isoliermaterials zwischen den Rotorstäben und dem Kern, um dadurch im Betrieb Stromfluss zwischen den Rotorstäben und dem Kern zu verhindern oder zu verringern.

11. Verfahren nach Anspruch 9, wobei die Isolierung durch Oberflächenbehandlung der Rotorstäbe bereitgestellt wird.

12. Verfahren nach Anspruch 10, wobei die Behandlung das Aufbringen einer keramischen oder auf Keramik basierten Isolierbeschichtung umfasst.

13. Verfahren nach Anspruch 10, wobei die Rotorstäbe aus Aluminiumlegierung sind und die Oberflächenbehandlung das Anodisieren der Stäbe umfasst, um eine anodische Beschichtung oder Schicht bereitzustellen.

14. Verfahren nach einem der Ansprüche 8 bis 12, welches den Schritt des Anwendens einer Oberflächenbehandlung auf die Oberflächen des Kerns angrenzend an die Rotorstäbe einschließt.

15. Kraftstoffpumpenanordnung, umfassend eine Pumpe und einen Elektromotor nach einem der Ansprüche 1 bis 8.

## Revendications

1. Moteur à induction immergé à fréquence variable à fort glissement, pour utilisation dans une pompe à carburant, le moteur comprenant
un rotor (18), immergé dans du carburant en utilisation, ledit rotor incluant :
un noyau de tôles empilées allongé (24) ayant une longueur et un diamètre,
une pluralité de barres de rotor électro-conductrices (26) s'étendant à travers ledit noyau, chacune ayant une première extrémité et une seconde extrémité, et
des premier et second anneaux d'extrémité électro-conducteurs (30) connectés électriquement respectivement aux première et seconde extrémités desdites barres de rotor, **caractérisé en ce que** :
la pluralité de barres de rotor électro-conductrices (26) ont une résistivité supérieure à 5 x 10⁻8 Ωm et
dans lequel un matériau isolant est disposé entre lesdites barres de rotor et ledit noyau de sorte à au moins réduire ou prévenir le flux de courant parasite entre les barres de rotor et ledit noyau.

2. Moteur selon la revendication 1, dans lequel le rapport de l'impédance axiale sur l'impédance mesurée entre les barres est d'au moins 5:1.

3. Moteur selon la revendication 1 ou 2, dans lequel ledit revêtement présente une tension de claquage de moins de 10 Volts.

4. Moteur selon l'une quelconque des revendications précédentes, dans lequel le rapport de la longueur sur le diamètre des barres de rotor est d'au moins 3:1.

5. Moteur selon l'une quelconque des revendications 1 à 4, dans lequel lesdites barres de rotor (26) incluent un revêtement de matériau isolant.

6. Moteur selon la revendication 5, dans lequel le revêtement est un revêtement isolant en céramique ou à base de céramique.

7. Moteur selon l'une quelconque des revendications 1 à 5, dans lequel lesdites barres de rotor (26) sont formées d'alliage d'aluminium, et lesdites barres sont pourvues d'un revêtement anodique isolant.

8. Agencement de moteur électrique à fréquence variable à fort glissement incluant un moteur selon l'une quelconque des revendications précédentes et une source pour fournir une tension à fréquence variable audit rotor pour contrôler sa vitesse.

9. Procédé de réduction de flux de courant parasite dans un moteur à induction immergé à fréquence variable à fort glissement, pour une pompe à carburant, le moteur ayant un rotor (18), immergé dans du carburant en utilisation et incluant un noyau de tôles empilées allongé (24), une pluralité de barres de rotor électro-conductrices (26) s'étendant à travers ledit noyau et ayant chacune une première extrémité et une seconde extrémité, les première et seconde extrémités étant connectées électriquement par des premier et second anneaux d'extrémité (30) respectifs, le procédé comprenant la formation des barres de rotor à partir d'un matériau électro-conducteur ayant une résistivité supérieure à 5 x 10-8 Ωm fournissant un matériau isolant entre la barre de rotor et le noyau de sorte à prévenir ou réduire le flux de courant entre les barres et le noyau.

10. Procédé de formation d'un rotor pour un moteur à induction immergé à fréquence variable à fort glissement, qui comprend :
la fourniture à un noyau de tôles empilées allongé (24) d'une pluralité de barres de rotor électro-conductrices (26) formées à partir d'un matériau électro-conducteur ayant une résistivité supérieure à 5 x 10⁻⁸ Ωm et s'étendant à travers ledit noyau, chaque barre de rotor ayant une première et une seconde extrémité, les première et seconde extrémités étant connectées électriquement par des premier et second anneaux d'extrémité (30) respectifs, et
la fourniture d'un matériau isolant entre la barre de rotor et le noyau, de sorte à prévenir ou réduire le flux de courant entre les barres de rotor et ledit noyau en fonctionnement.

11. Procédé selon la revendication 9, dans lequel ladite isolation est fournie par traitement de surface des barres de rotor.

12. Procédé selon la revendication 10, dans lequel ledit traitement comprend l'application d'un revêtement isolant en céramique ou à base de céramique.

13. Procédé selon la revendication 10, dans lequel lesdites barres de rotor sont en alliage d'aluminium et ledit traitement de surface comprend l'anodisation desdites barres pour fournir un revêtement ou une couche anodique.

14. Procédé selon l'une quelconque des revendications 8 à 12 qui inclut l'étape d'application d'un traitement de surface sur les surfaces dudit noyau adjacentes auxdites barres de rotor.

15. Agencement de pompe à carburant comprenant une pompe et un moteur électrique selon l'une quelconque des revendications 1 à 8.
